# EUROPEAN PATENT APPLICATION

(11) **EP 4 826 623 A1**
(43) Date of publication of application: **21.10.2026**
(21) Application number: 24920381.1
(22) Date of filing: 22.01.2024
(51) Int. Cl.: G06Q 10/20, G06Q 10/0631

(54) **MAINTENANCE PLAN CREATION ASSISTANCE DEVICE, MAINTENANCE PLAN CREATION ASSISTANCE METHOD, AND MAINTENANCE PLAN CREATION ASSISTANCE PROGRAM**

(71) Applicant: Mitsubishi Electric Corporation, Tokyo 100-8310 (JP); Mitsubishi Electric Building Solutions Corporation, Tokyo 100-0006 (JP)
(72) Inventor: GOTO, Kei, Tokyo 100-8310 (JP); SAKATA, Koji, Tokyo 100-8310 (JP); FUJITA, Takeshi, Tokyo 100-0006 (JP); HIKICHI, Masaki, Tokyo 100-0006 (JP); MOTOE, Ayaka, Tokyo 100-0006 (JP); KADO, Yoshiki, Tokyo 100-0006 (JP)
(74) Representative: Plasseraud IP
(86) International application number: PCT/JP2024/001613
(87) International publication number: WO 2025/158489

(57) **Abstract**

A maintenance plan creation support apparatus (100) includes a maintenance plan creation unit (120). When a maintenance work amount during a subject period exceeds a permissible amount for personnel in charge of maintenance during the subject period in a maintenance plan that indicates a scheduled maintenance period for each piece of equipment to be maintained by the personnel in charge of maintenance, the maintenance plan creation unit (120) changes a part of maintenance work scheduled to be performed within a period that includes at least a part of the subject period, to be performed during a period that does not overlap with the subject period so that the maintenance work amount during the subject period does not exceed the permissible amount in the maintenance plan. In a case where an administrator of a subject equipment is set as a subject administrator and the scheduled maintenance period corresponding to the subject equipment indicated in the maintenance plan is set as a subject scheduled period, when the subject administrator does not approve maintenance work to be performed on the subject equipment during the subject scheduled period, the maintenance plan creation unit (120) changes the scheduled maintenance period corresponding to the subject equipment to a period during which the subject administrator performs maintenance work on the subject equipment, in the maintenance plan.

## Description

### Technical Field

The present disclosure relates to a maintenance plan creation support apparatus, a maintenance plan creation support method, and a maintenance plan creation support program.

### Background Art

There is a technology that realizes relatively efficient maintenance work by creating maintenance plans and operation plans for equipment that is subject to maintenance based on detected anomalies. Patent Literature 1 discloses a maintenance management system which is an example of this technology.

The technology disclosed in Patent Literature 1 first creates a maintenance plan for equipment based on "equipment operation plan" and "detected anomalies". Next, when an anomaly is detected, a time of failure is predicted based on the "equipment operation plan", and a maintenance plan is formulated according to the predicted time of failure and the type of failure. Next, the future operation plan is updated based on the formulated maintenance plan. Here, the operation plan is, as a specific example, an operation frequency. The operation plan is also referred to as an operation schedule.

### Citation List

### Patent Literature

Patent Literature 1: JP 2019-003440 A

### Summary of Invention

### Technical Problem

In the maintenance management system according to conventional technology, the operation schedule of equipment is predetermined, and it's necessary for an owner and a maintenance company of the equipment to share this operation schedule.

Here, in cases where personnel related to equipment do not all belong to the same department, such as those related to elevators, escalators, or the like, it is difficult to share the operation schedule for each piece of equipment and the availability of the personnel related to equipment. The personnel related to equipment are, as a specific example, owners or maintenance workers of that equipment. Users of that equipment may also be included in the personnel related to equipment.

Further, in conventional technology, even when the maintenance company is responsible for maintaining a plurality of pieces of equipment owned by a large number of different owners, an infeasible maintenance plan may be formulated because the availability on the side of the maintenance company is not considered. The infeasible maintenance plan is, as a specific example, a maintenance plan in which the work amount indicated in the maintenance plan temporarily exceeds the work amount that the maintenance company can handle.

The present disclosure aims to support the efficient creation of a maintenance plan for equipment that is acceptable to both the owner and the maintenance company, even when the maintenance company is responsible for maintaining a plurality of pieces of equipment owned by a large number of different owners.

### Solution to Problem

A maintenance plan creation support apparatus according to the present disclosure includes
a maintenance plan creation unit, wherein when a maintenance work amount during a subject period exceeds a permissible amount for personnel in charge of maintenance during the subject period in a maintenance plan which is a plan that indicates a scheduled maintenance period which is a period during which maintenance work on each piece of equipment is scheduled to be performed, for each piece of equipment to be maintained by the personnel in charge of maintenance, and is a plan created based on prediction of a failure time corresponding to each piece of equipment, the maintenance plan creation unit changes a part of maintenance work scheduled to be performed within a period that includes at least a part of the subject period, to be performed during a period that does not overlap with the subject period so that the maintenance work amount during the subject period does not exceed the permissible amount in the maintenance plan, and
in a case where each piece of equipment indicated in the maintenance plan is set as a subject equipment, an administrator of the subject equipment is set as a subject administrator, and the scheduled maintenance period corresponding to the subject equipment indicated in the maintenance plan is set as a subject scheduled period, when the subject administrator does not approve maintenance work to be performed on the subject equipment during the subject scheduled period, the maintenance plan creation unit changes the scheduled maintenance period corresponding to the subject equipment to an approval period which is a period during which the subject administrator approves maintenance work on the subject equipment to be performed, in the maintenance plan.

### Advantageous Effects of Invention

According to the present disclosure, when a maintenance work amount during a subject period exceeds a permissible amount for personnel in charge of maintenance during the subject period, a maintenance plan creation unit changes a part of maintenance work scheduled to be performed within a period that includes at least a part of the subject period, to be performed during a period that does not overlap with the subject period so that the maintenance work amount during the subject period does not exceed the permissible amount in a maintenance plan. Further, when a subject administrator does not approve maintenance work to be performed on subject equipment during a subject scheduled period, the maintenance plan creation unit changes the scheduled maintenance period corresponding to the subject equipment, to a period during which the subject administrator approves the maintenance work to be performed on the subject equipment in the maintenance plan. Therefore, according to the present disclosure, it is possible to support the efficient creation of a maintenance plan for equipment that is acceptable to both the owner and the maintenance company, even when the maintenance company is responsible for maintaining a plurality of pieces of equipment owned by a large number of different owners.

### Brief Description of Drawings

Fig. 1 is a diagram illustrating an example of a configuration of a maintenance plan creation support apparatus 100 according to Embodiment 1.
Fig. 2 is a diagram illustrating an example of a hardware configuration of the maintenance plan creation support apparatus 100 according to Embodiment 1.
Fig. 3 is a flowchart illustrating operation of the maintenance plan creation support apparatus 100 according to Embodiment 1.
Fig. 4 is a diagram that describes processing of a failure time prediction unit 110 according to Embodiment 1, where (a) is a diagram that describes a failure rate and a scheduled maintenance date and (b) is a diagram illustrating an example of output of the failure time prediction unit 110.
Fig. 5 is a diagram that describes processing of a maintenance plan creation unit 120 and a maintenance plan adjustment unit 130 according to Embodiment 1.
Fig. 6 is a diagram that describes the processing of the maintenance plan creation unit 120 according to Embodiment 1.
Fig. 7 is a diagram illustrating an example of the hardware configuration of the maintenance plan creation support apparatus 100 according to a modification of Embodiment 1.
Fig. 8 is a diagram illustrating an example of a configuration of the maintenance plan creation support apparatus 100 according to Embodiment 2.
Fig. 9 is a flowchart illustrating operation of the maintenance plan creation support apparatus 100 according to Embodiment 2.
Fig. 10 is a diagram that describes processing of a maintenance plan creation unit 220 according to Embodiment 2.

### Description of Embodiments

In the description and drawings of embodiments, the same elements and corresponding elements are denoted by the same reference sign. The description of elements denoted by the same reference sign will be omitted or simplified as appropriate. Arrows in the drawings mainly indicate flows of data or flows of processing. Further, "unit" may be appropriately interpreted as "circuit", "step", "procedure", "process", or "circuitry".

### Embodiment 1.

In the following, the present embodiment will be described in detail with reference to the drawings.

Here, an owner of each piece of equipment does not want to suspend each piece of equipment for maintenance work in such a case when the usage frequency of each piece of equipment is relatively high. Further, the owner of each piece of equipment does not want maintenance work to be performed on a day when it is difficult to handle an acceptance response due to the absence of a person in charge or for another reason. On the other hand, a maintenance company wants to perform maintenance work on each piece of equipment before each piece of equipment fails, and wants to reduce a maintenance work amount as much as possible. Further, the maintenance company wants to decide a maintenance work day while considering maintenance work on equipment of each of other owners. As a common problem for both the owner of each piece of equipment and the maintenance company, it is raised that adjusting the maintenance work day while considering various schedules is time-consuming. The present embodiment aims to solve this problem.

### *** Description of Configuration ***

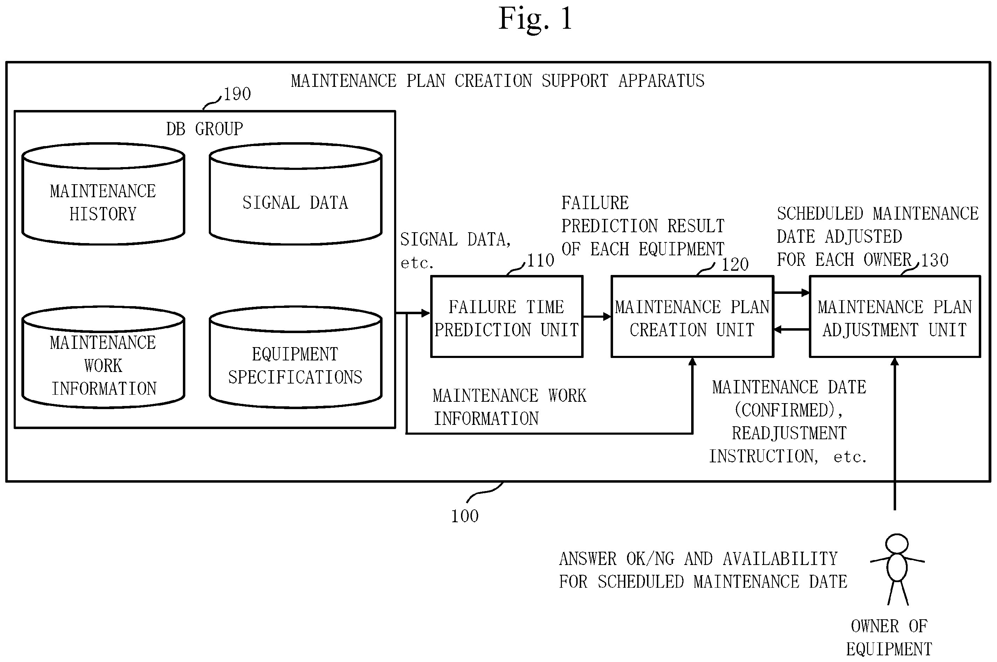

Fig. 1 illustrates an example of a configuration of a maintenance plan creation support apparatus 100 according to the present embodiment. The maintenance plan creation support apparatus 100 includes, as illustrated in the present diagram, a failure time prediction unit 110, a maintenance plan creation unit 120, a maintenance plan adjustment unit 130, and a database (DB) group 190.

The maintenance plan creation support apparatus 100 supports the creation of plans for maintaining a large number of pieces of equipment.

The failure time prediction unit 110 predicts for each of the plurality of pieces of equipment, a failure time of each piece of equipment based on operation data or the like of each piece of equipment, and decides a scheduled maintenance period during which maintenance work is performed for each piece of equipment based on the predicted failure time. Each piece of equipment is subject to maintenance. The failure time prediction unit 110 predicts the failure time of each piece of equipment based on, as a specific example, signal data, specifications, maintenance history, and the like of each piece of equipment.

There may be a plurality of pieces of equipment in one site. Further, a certain owner may own a plurality of pieces of equipment, and the plurality of pieces of equipment owned by the certain owner may be collectively treated as one piece of equipment. The scheduled maintenance period may also be a period that indicates a date and a time window during which maintenance work is performed. A scheduled maintenance date is a specific example of the scheduled maintenance period.

When a maintenance work amount during a subject period exceeds a permissible amount for personnel in charge of maintenance during the subject period in a maintenance plan, the maintenance plan creation unit 120 changes a part of maintenance work scheduled to be performed within a period that includes at least a part of the subject period, to be performed during a period that does not overlap with the subject period so that the maintenance work amount during the subject period does not exceed the permissible amount in the maintenance plan. The maintenance plan is a plan that indicates the scheduled maintenance period which is a period during which the personnel in charge of maintenance have scheduled to perform maintenance work on each piece of equipment, for each piece of equipment that needs maintenance, and is a plan that has been created based on the prediction of failure time corresponding to each piece of equipment. The personnel in charge of maintenance are, as a specific example, a maintenance company. Further, in a case where each piece of equipment indicated in the maintenance plan is set as subject equipment, an administrator of the subject equipment is set as a subject administrator, and the scheduled maintenance period corresponding to the subject equipment indicated in the maintenance plan is set as a subject scheduled period, when the subject administrator does not approve maintenance work to be performed on the subject equipment during the subject scheduled period, the maintenance plan creation unit 120 changes the scheduled maintenance period corresponding to the subject equipment to an approval period, in the maintenance plan. The approval period is a period during which the subject administrator approves maintenance work to be performed on the subject equipment. The administrator of the subject equipment is, as a specific example, an owner of the subject equipment or a person who has been entrusted with managing the subject equipment by the owner of the subject equipment. When the subject administrator does not approve maintenance work to be performed on the subject equipment during the subject scheduled period, the maintenance plan creation unit 120 changes the scheduled maintenance period corresponding to the subject equipment, to the approval period so that the maintenance work amount during the approval period does not exceed the permissible amount for the personnel in charge of maintenance during the approval period, in the maintenance plan. When the maintenance plan adjustment unit 130 decides to change the scheduled maintenance period corresponding to the subject equipment, the maintenance plan creation unit 120 changes the scheduled maintenance period corresponding to the subject equipment. When the maintenance work amount during the subject period exceeds the permissible amount for the personnel in charge of maintenance during the subject period in the maintenance plan, the maintenance plan creation unit 120 calculates priority corresponding to each piece of equipment in which maintenance work is scheduled to be performed within a period that includes at least a part of the subject period, and changes the scheduled maintenance period corresponding to each piece of equipment whose corresponding priority is relatively low, to a period that does not overlap with the subject period, in the maintenance plan.

The maintenance plan creation unit 120 estimates a workload on the maintenance company for each piece of equipment based on the scheduled maintenance date corresponding to each piece of equipment decided by the failure time prediction unit 110, and appropriately adjusts the scheduled maintenance date corresponding to each piece of equipment based on the estimated workload, as a specific example. Further, the maintenance plan creation unit 120 readjusts the scheduled maintenance date according to an instruction from the maintenance plan adjustment unit 130.

The maintenance plan adjustment unit 130 notifies the subject administrator of the subject scheduled period, and decides whether or not to change the scheduled maintenance period corresponding to the subject equipment in the maintenance plan based on a response of the subject administrator that indicates whether or not to approve maintenance work to be performed on the subject equipment during the subject scheduled period. When the subject administrator approves the maintenance work to be performed on the subject equipment during the subject scheduled period, the maintenance plan adjustment unit 130 sets a period during which the maintenance work is performed on the subject equipment as a subject scheduled period.

The maintenance plan adjustment unit 130 calculates priority corresponding to each piece of equipment based on an emergency level of failure, a type of contract, and the like corresponding to each piece of equipment, and notifies the owner of each piece of equipment of the scheduled maintenance date corresponding to each piece of equipment according to the calculated priority, as a specific example. After that, the maintenance plan adjustment unit 130 causes the maintenance plan creation unit 120 to appropriately adjust the scheduled maintenance date based on the response of the owner of each piece of equipment.

The DB group 190 is a database that stores each of maintenance history, signal data, maintenance work information, and equipment specifications.

The maintenance history is data that indicates the history of maintenance performed on each piece of equipment.

The signal data is data that indicates signals of each device or the like included in the equipment.

The maintenance work information is data that indicates a working time for each content of maintenance, the permissible amount of maintenance work for the maintenance company, and the like.

The equipment specifications are data that indicates the specifications of each piece of equipment.

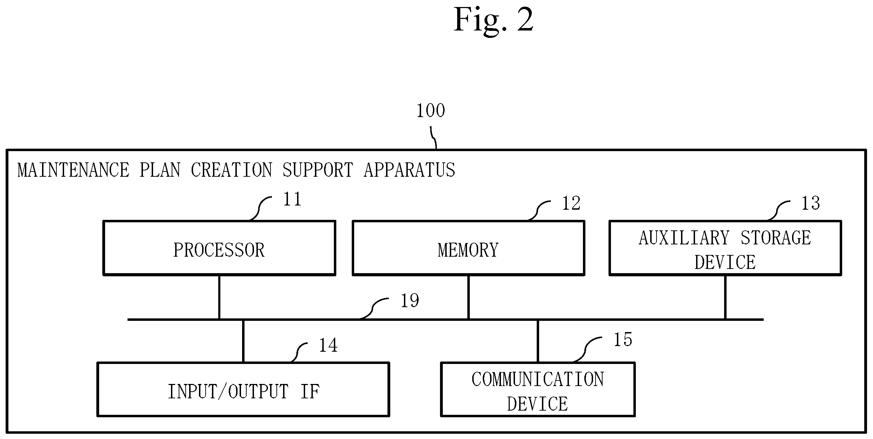

Fig. 2 illustrates an example of a hardware configuration of the maintenance plan creation support apparatus 100 according to the present embodiment. The maintenance plan creation support apparatus 100 consists of a computer. The maintenance plan creation support apparatus 100 may consist of a plurality of computers.

The maintenance plan creation support apparatus 100, as illustrated in the present diagram, is a computer that includes pieces of hardware such as a processor 11, a memory 12, an auxiliary storage device 13, an input/output interface (IF) 14, and a communication device 15. These pieces of hardware are appropriately connected via signal lines 19.

The processor 11 is an Integrated Circuit (IC) that performs arithmetic operation and controls the hardware included in the computer. The processor 11 is, as a specific example, a Central Processing Unit (CPU), a Digital Signal Processor (DSP), or a Graphics Processing Unit (GPU).

The maintenance plan creation support apparatus 100 may include a plurality of processors as an alternative to the processor 11. The plurality of processors share the role of the processor 11.

The memory 12 is typically a volatile memory device and is, as a specific example, a Random Access Memory (RAM). The memory 12 is also referred to as a main storage device or a main memory. Data stored in the memory 12 is saved in the auxiliary storage device 13 as necessary.

The auxiliary storage device 13 is typically a non-volatile memory device and is, as a specific example, a Read Only Memory (ROM), a Hard Disk Drive (HDD), or a flash memory. Data stored in the auxiliary storage device 13 is loaded into the memory 12 as necessary.

The memory 12 and the auxiliary storage device 13 may be configured integrally.

An input/output IF 14 is a port to which an input device and an output device are connected. The input/output IF 14 is, as a specific example, a Universal Serial Bus (USB) terminal. The input devices are, as specific examples, a keyboard and a mouse. The output device is, as a specific example, a display.

The communication device 15 is a receiver and a transmitter. The communication device 15 is, as a specific example, a communication chip or a Network Interface Card (NIC).

Each part of the maintenance plan creation support apparatus 100 may appropriately use the input/output IF 14 and the communication device 15 when communicating with another device or the like.

The auxiliary storage device 13 stores a maintenance plan creation support program. The maintenance plan creation support program is a program that causes the computer to implement a function of each unit of the maintenance plan creation support apparatus 100. The maintenance plan creation support program is loaded into the memory 12 and executed by the processor 11. The function of each unit of the maintenance plan creation support apparatus 100 is implemented by software.

Data used when the maintenance plan creation support program is executed, data obtained by executing the maintenance plan creation support program, and the like are appropriately stored in a storage device. Each unit of the maintenance plan creation support apparatus 100 appropriately uses the storage device. The storage device includes at least one of the memory 12, the auxiliary storage device 13, a register in the processor 11, and a cache memory in the processor 11, as a specific example. It should be noted that the term data and the term information may sometimes have the same meaning. The storage device may be independent of the computer.

Functions of the memory 12 and the auxiliary storage device 13 may be implemented by another storage device.

The maintenance plan creation support program may be recorded in a computer readable non-volatile recording medium. The non-volatile storage medium is, as a specific example, an optical disc or a flash memory. The maintenance plan creation support program may be provided as a program product.

### *** Description of Operation ***

An operation procedure of the maintenance plan creation support apparatus 100 is equivalent to a maintenance plan creation support method. Further, a program that implements operation of the maintenance plan creation support apparatus 100 is equivalent to the maintenance plan creation support program.

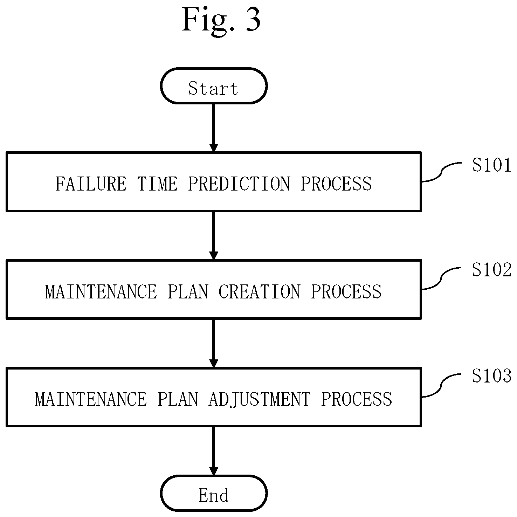

Fig. 3 is a flowchart illustrating an example of the operation of the maintenance plan creation support apparatus 100. The operation of the maintenance plan creation support apparatus 100 will be described with reference to Fig. 3.

### (Step S101)

First, the failure time prediction unit 110, for each piece of equipment, predicts a future failure occurrence time and a type of failure using data such as signal data and specification information of each piece of equipment, machine learning (Artificial Intelligence), a statistical method, a physical model, or the like.

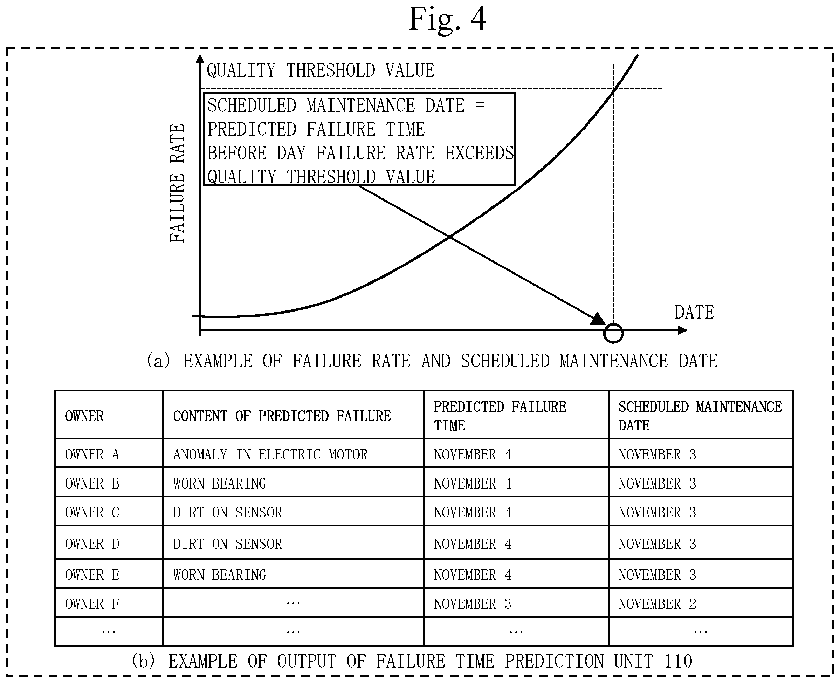

Next, the failure time prediction unit 110 decides the scheduled maintenance date for each piece of equipment based on a prediction result. As illustrated in (a) of Fig. 4, the failure time prediction unit 110 sets a timing immediately before a failure rate corresponding to each piece of equipment exceeds a quality threshold value as the scheduled maintenance date for each piece of equipment, as a specific example. Further, (b) of Fig. 4 illustrates a specific example of output of the failure time prediction unit 110. (b) of Fig. 4 illustrates the prediction result of a content of failure by the failure time prediction unit 110, the prediction result of the failure time by the failure time prediction unit 110, and the scheduled maintenance date decided by the failure time prediction unit 110, for each owner. The failure rate corresponding to each piece of equipment may have a probabilistic range, that is, the failure rate corresponding to each piece of equipment may be indicated not by a curve, but by a wide range. In this case, the timing at which the failure rate exceeds the quality threshold value is within a certain period, and it is probabilistically decided whether or not the failure rate exceeds the quality threshold value at each time point within the certain period. Further, the quality threshold value may differ depending on a type of equipment, a type of failure, a type of maintenance contract, or the like. When the maintenance contract offers relatively high-quality maintenance at a relatively high maintenance cost, the quality threshold value depending on the type of the maintenance contract is set relatively low, that is, maintenance work is scheduled to be performed when the failure rate is relatively low, as a specific example. Further, when the maintenance contract offers relatively low-quality maintenance at a relatively low maintenance cost, the corresponding quality threshold value is set relatively high, that is, maintenance work is scheduled to be performed when the failure rate is relatively high.

### (Step S102)

The maintenance plan creation unit 120 calculates the work amount for the maintenance company for each fixed period based on scheduled maintenance dates and contents of work related to all pieces of equipment. The contents of work include, as a specific example, the number of workers and working hours. Even for maintenance work on the same equipment, the actual work amount may vary depending on an installation location, an installation situation, and the like of the equipment since there is a site where work is easy due to a reason such as a wide workspace, a site where work is difficult due to a reason such as a narrow workspace, or the like. Therefore, even if contents of failure or the like are the same, the work amount to be calculated for each owner equipment may vary.

When there are periods during which the calculated work amount exceeds a permissible amount for the maintenance company, the maintenance plan creation unit 120 appropriately adjusts for each period during which the calculated work amount exceeds the permissible amount, the scheduled maintenance date corresponding to each piece of equipment on which maintenance work is scheduled to be performed. The work amount indicated in the maintenance plan may also take into account a movement time of a worker. The permissible amount of the work amount for the same maintenance company may vary for each period.

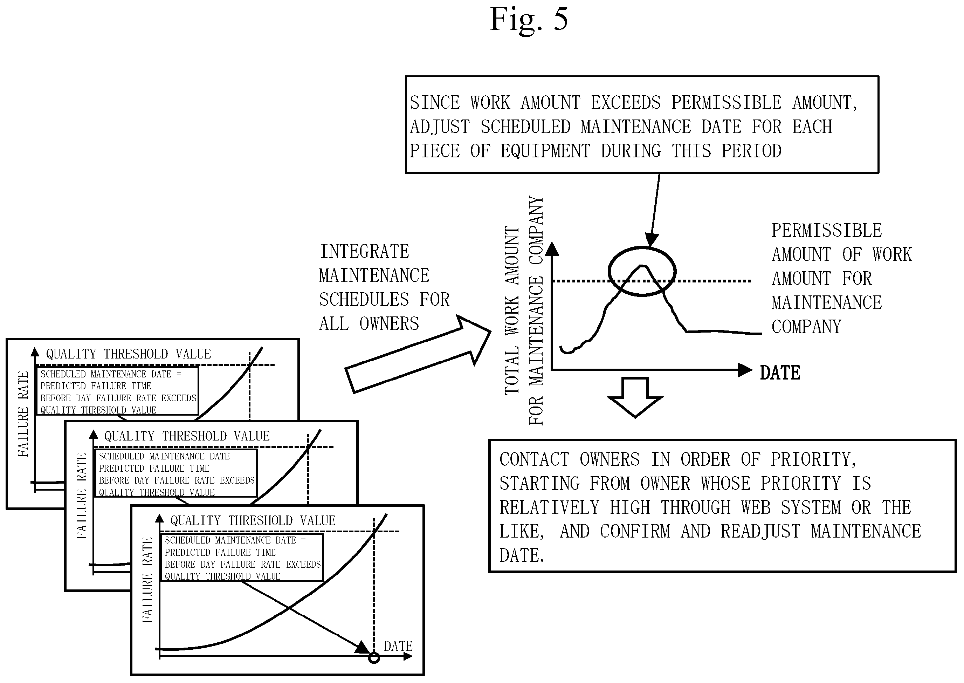

Fig. 5 illustrates an image of processing executed by the maintenance plan creation unit 120. The maintenance plan creation unit 120 integrates maintenance work schedules related to pieces of equipment of all owners and checks whether or not the total work amount for the maintenance company exceeds the permissible amount of the work amount for the maintenance company, for each date. Here, in Fig. 5, there is a period during which the maintenance work amount exceeds the permissible amount. The maintenance plan creation unit 120 adjusts the scheduled maintenance date corresponding to each piece of equipment on which maintenance work is scheduled to be performed during the period so that the maintenance work amount does not exceed the permissible amount during the period.

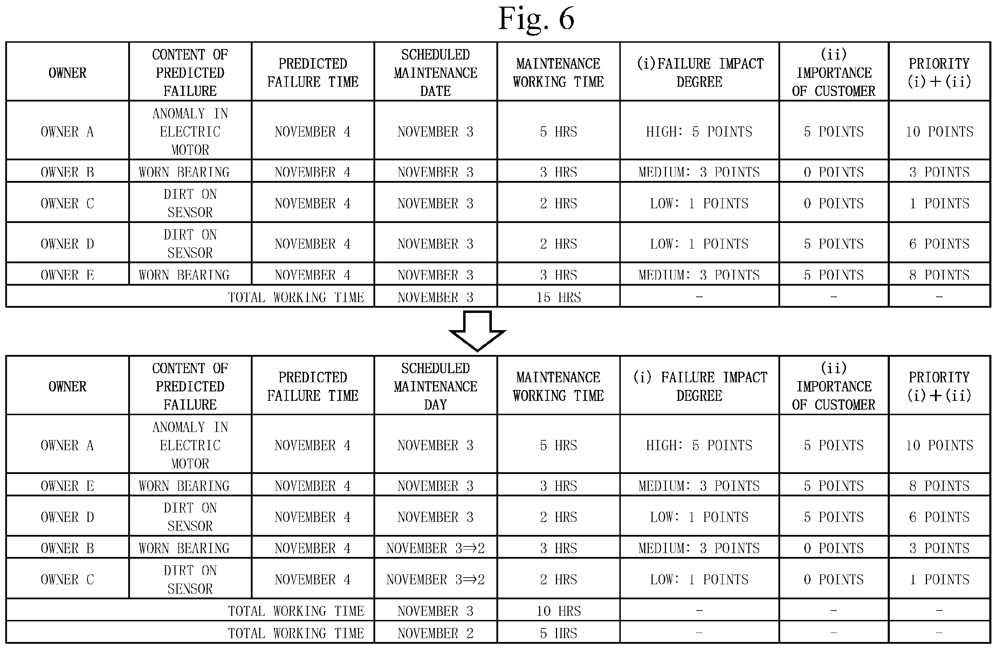

First, as illustrated in Fig. 6, when the total working time exceeds the permissible amount (10 hours in the present example) on November 3 which is the subject period, the maintenance plan creation unit 120 refers to the DB group 190 and associates a maintenance working time, a failure impact degree, and the like with the failure prediction result, for each type of failure, as a specific example. Further, the maintenance plan creation unit 120 also associates information such as whether or not the owner of each piece of equipment is an important customer with the failure prediction result. The failure prediction result is a prediction result generated by the failure time prediction unit 110. In the present example, the scheduled maintenance date is adjusted on a daily basis. Further, the maintenance work amount is represented by the number of working hours. The maintenance work on certain equipment may be performed over a plurality of dates.

Next, the maintenance plan creation unit 120 calculates priority corresponding to each owner based on information associated with the failure prediction result. At this time, the maintenance plan creation unit 120 may score each item or may use other qualification methods. The priority is decided depending on, as a specific example, a margin time until failure occurs, the failure impact degree, importance of customer, and a cost of maintenance work.

Then, the maintenance plan creation unit 120 decides each piece of equipment for which maintenance work is performed on November 3 based on the priority corresponding to each piece of equipment so that the total working time on November 3 fits within 10 hours. Further, the maintenance plan creation unit 120 changes the scheduled maintenance date to a different date for each piece of equipment in a part in which the total working time exceeds 10 hours, that is, for each piece of equipment whose corresponding priority is relatively low among pieces of equipment in which maintenance work is scheduled to be performed on November 3. The maintenance plan creation unit 120 may change each scheduled maintenance date so that the maintenance work amount does not exceed the permissible amount on the changed date at a time of changing the scheduled maintenance date. When the maintenance work amount exceeds the permissible amount on the changed date without considering that the maintenance work amount exceeds the permissible amount on the changed date at the time of changing the scheduled maintenance date, the maintenance plan creation unit 120 may also appropriately change the scheduled maintenance date corresponding to each piece of equipment on the changed date. Further, regarding a change in the scheduled maintenance date, although the scheduled maintenance date is basically ahead of schedule, the scheduled maintenance date may be postponed depending on the type of failure, the content of maintenance work, or the like.

### (Step S103)

First, the maintenance plan adjustment unit 130 sequentially notifies the owner of each piece of equipment of the scheduled maintenance date created by the maintenance plan creation unit 120, through a WEB system or the like. Each owner sends a response that indicates whether or not to approve the proposed scheduled maintenance date. The maintenance plan adjustment unit 130 may present a plurality of candidates for the scheduled maintenance date to each owner, and may simultaneously notify each owner of a plurality of owners of the scheduled maintenance date corresponding to each owner. The response of the owner may include a date and time that is available to the owner.

Next, depending on the response of each owner, the maintenance plan adjustment unit 130 confirms or readjusts the scheduled maintenance date for each piece of equipment. When readjusting the scheduled maintenance date, the maintenance plan adjustment unit 130 instructs the maintenance plan creation unit 120 to readjust the scheduled maintenance date. At this time, when the response of the owner includes the date and time that is available to the owner, the maintenance plan adjustment unit 130 communicates this date and time to the maintenance plan creation unit 120. When the maintenance plan adjustment unit 130 readjusts the scheduled maintenance date corresponding to certain equipment, the maintenance plan adjustment unit 130 executes the same processing as processing in the first adjustment related to this certain equipment.

The maintenance plan adjustment unit 130 decides order of adjustments with each owner, that is, order of contacting each owner based on, as a specific example, the priority calculated by the maintenance plan creation unit 120. The maintenance plan adjustment unit 130 contacts owners in order of priority, staring from the owner corresponding to equipment whose corresponding priority is relatively high, and preferentially confirms the scheduled maintenance date corresponding to each piece of equipment of the owner corresponding to equipment whose corresponding priority is relatively high, as a specific example. The order of adjustments may also be decided based on another importance, or the like.

### *** Description of Effects of Embodiment 1 ***

As described above, according to the present embodiment, even if the operation schedule of each piece of equipment, the availability of the owner of each piece of equipment, and the availability of a maintenance company are not shared between the owner of each piece of equipment and the maintenance company, a maintenance plan that is easily acceptable to both the owner and the maintenance company and that is effective and efficient can be created.

Further, according to the present embodiment, the workload on the maintenance company can be adjusted, which leads to the execution of maintenance work with sufficient capacity. Therefore, the present embodiment contributes to the improvement of maintenance quality.

### *** Other Configurations ***

### <Modification 1>

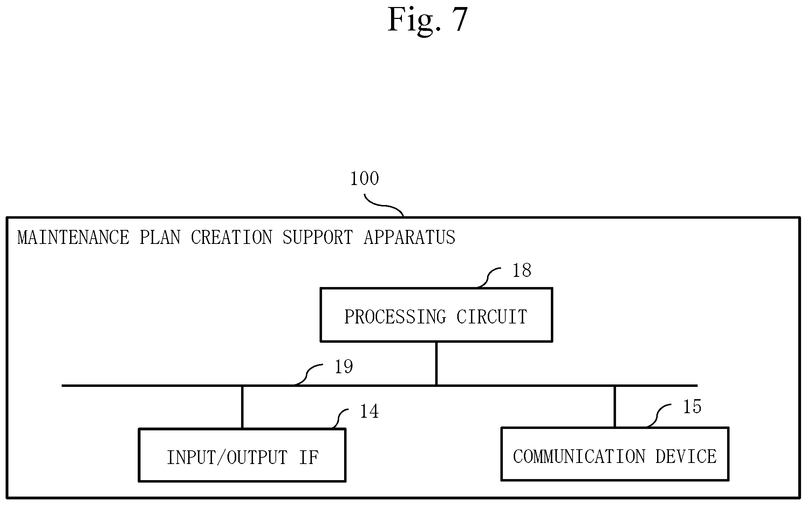

Fig. 7 illustrates an example of the hardware configuration of the maintenance plan creation support apparatus 100 according to the present modification.

The maintenance plan creation support apparatus 100 includes a processing circuit 18 in place of the processor 11, the processor 11 and the memory 12, the processor 11 and the auxiliary storage device 13, or the processor 11, the memory 12 and the auxiliary storage device 13.

The processing circuit 18 is hardware that implements at least a part of each unit included in the maintenance plan creation support apparatus 100.

The processing circuit 18 may be dedicated hardware or a processor that executes a program stored in the memory 12.

When the processing circuit 18 is the dedicated hardware, the processing circuit 18 is, as a specific example, a single circuit, a composite circuit, a programmed processor, a parallel programmed processor, an Application Specific Integrated Circuit (ASIC), a Field Programmable Gate Array (FPGA), or a combination thereof.

The maintenance plan creation support apparatus 100 may include a plurality of processing circuits as an alternative to the processing circuit 18. The plurality of processing circuits may share the role of the processing circuit 18.

In the maintenance plan creation support apparatus 100, some functions may be implemented by dedicated hardware, while the remaining functions may be implemented by software or firmware.

The processing circuit 18 is implemented by, as a specific example, hardware, software, firmware, or a combination thereof.

The processor 11, the memory 12, the auxiliary storage device 13, and the processing circuit 18 are collectively referred to as "processing circuitry". In other words, the functions of the individual functional components of the maintenance plan creation support apparatus 100 are implemented by the processing circuitry.

The maintenance plan creation support apparatus 100 according to other embodiments may also have the same configuration as the present modification.

### Embodiment 2.

In the following, points that differ from the embodiment described above will be mainly described with reference to the drawings.

### *** Description of Configuration ***

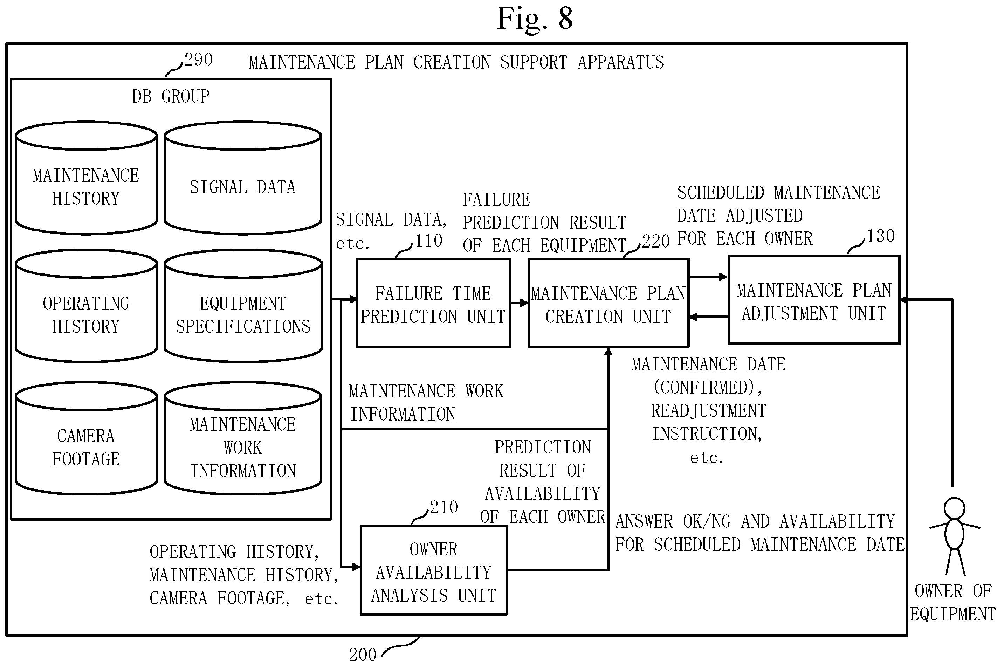

Fig. 8 illustrates an example of a configuration of a maintenance plan creation support apparatus 200 according to the present embodiment. Compared with the maintenance plan creation support apparatus 100, the maintenance plan creation support apparatus 200 includes a maintenance plan creation unit 220 in place of the maintenance plan creation unit 120, a DB group 290 in place of the DB group 190, and further includes an owner availability analysis unit 210.

The owner availability analysis unit 210 estimates a period during which the subject administrator is likely to approve maintenance work on the subject equipment based on the actual performance of maintenance work on the subject equipment. The owner availability analysis unit 210 may generate an approval indicator to estimate the period during which the subject administrator is likely to approve maintenance work on the subject equipment. The approval indicator is an indicator corresponding to the subject administrator, and is an indicator that indicates the ease of approval of maintenance work on the subject equipment for each period.

The owner availability analysis unit 210 analyzes a usage amount for each piece of equipment based on operating history, camera footage and the like, and predicts a future usage amount based on an analysis result, as a specific example. The operating history is, as a specific example, history that indicates startup frequency and startup dates and times.

Further, the owner availability analysis unit 210 refers to the past maintenance history to analyze dates and times, days of the week, and the like when each owner has accepted maintenance work in the past. The owner availability analysis unit 210 calculates a rate of maintenance work accepted by each owner in the past, for each day of the week or for each time period, as a specific example.

After that, the owner availability analysis unit 210 creates an owner availability prediction value for each owner by a statistical analysis or the like based on the prediction of the future usage amount for each piece of equipment and the analysis result of the maintenance history. The owner availability prediction value is an indicator that indicates the prediction result of the ease of acceptance of maintenance work related to each owner. The owner availability prediction value may also be an indicator that indicates a ratio of the number of acceptances of maintenance work to the total number of acceptances of maintenance work, for each day of the week, and may also be an indicator that indicates a ratio of the number of acceptances of maintenance work to the total number of acceptances of maintenance work, for each time period, and may also be an indicator that combines these indicators.

The DB group 290 stores operating history and camera footage in addition to data stored in the DB group 190.

The operating history is data that indicates operating history of each piece of equipment.

The camera footage is data that indicates images in which each piece of equipment is captured.

In addition to the functions of the maintenance plan creation unit 120 according to Embodiment 1, the maintenance plan creation unit 220 has a function to create a maintenance plan that takes into account the owner availability prediction value. Specifically, in the maintenance plan, the maintenance plan creation unit 220 sets the scheduled maintenance period corresponding to the subject equipment as a period within the period during which it is estimated that the subject administrator is likely to approve maintenance work on the subject equipment. As a specific example, the maintenance plan creation unit 220 sets a period corresponding to a value that is equal to or greater than an approval threshold value in the approval indicator, as the period during which it is estimated that the subject administrator is likely to approve maintenance work on the subject equipment. The value of the approval threshold value may vary for each period.

In the present embodiment, the scheduled maintenance date corresponding to certain equipment is selected from among dates and times whose owner availability prediction value corresponding to the certain equipment is equal to or greater than the threshold value. Therefore, according to the present embodiment, it is possible to avoid scheduling a day in advance on which the owner is highly likely to want the equipment not to be suspended.

### *** Description of Operation ***

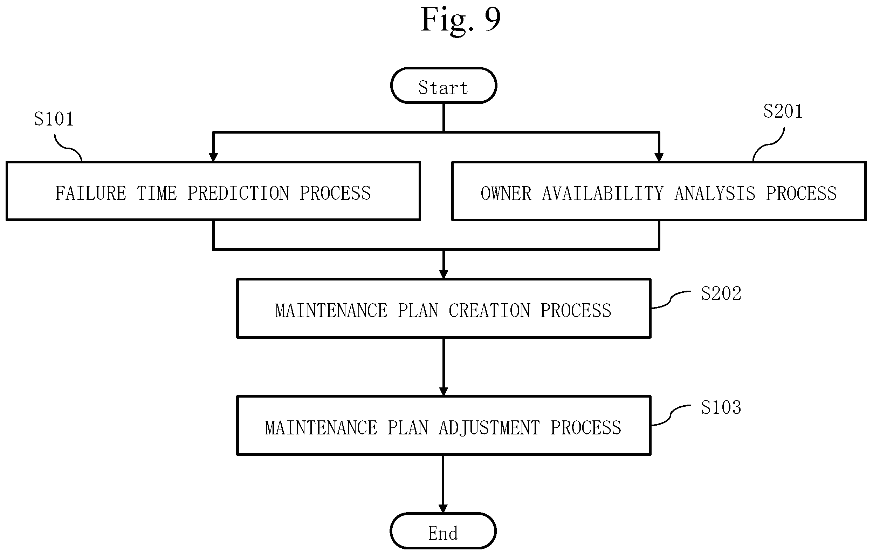

Fig. 9 is a flowchart illustrating an example of operation of the maintenance plan creation support apparatus 200. The operation of the maintenance plan creation support apparatus 200 will be described with reference to Fig. 9.

### (Step S201)

The owner availability analysis unit 210 analyzes the availability of the owner based on the operating history, the camera footage, and the like, and calculates the owner availability prediction value for each period based on the analysis result.

### (Step S202)

When the owner prediction value in the maintenance scheduled date indicated in the created maintenance plan is less than the approval threshold value, the maintenance plan creation unit 220 adjusts the scheduled maintenance date for each piece of equipment. Further, when changing the scheduled maintenance date corresponding to each piece of equipment, the maintenance plan creation unit 220 considers the owner prediction value corresponding to each piece of equipment. The rest of the process is the same as in step S102

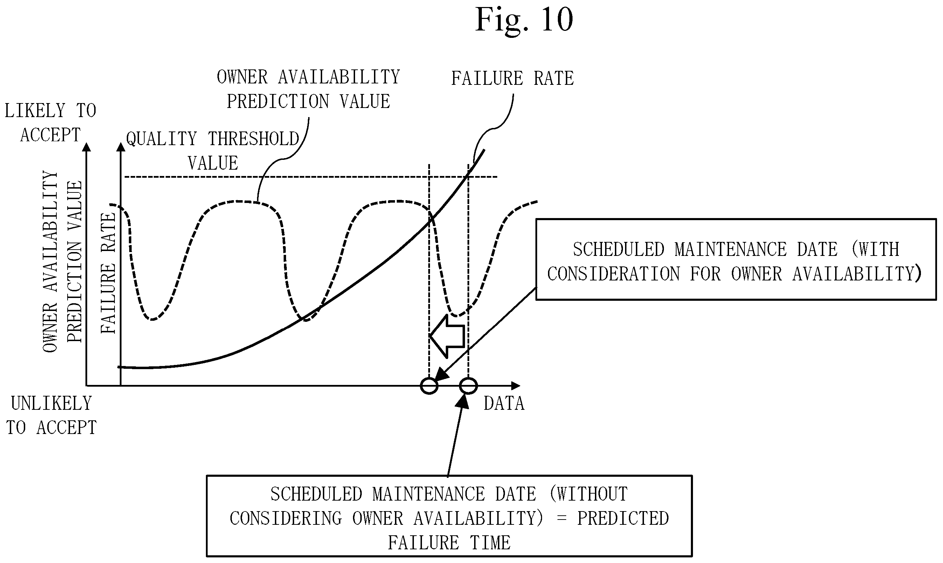

Fig. 10 indicates a specific example of a process of deciding the scheduled maintenance date that takes into account the owner availability prediction value. In the present example, the owner availability prediction value is calculated as the approval indicator on a daily basis. When the scheduled maintenance date is not decided without considering the availability of the owner, a day on which the owner is highly likely to want the equipment not to be suspended due to a reason such as the usage amount (load) of the equipment being high, may be the scheduled maintenance date. On the other hand, the scheduled maintenance date can be set within a period during which the failure rate is high and within a period during which it is estimated that the owner is likely to accept maintenance (at a time of low equipment operation or the like), by deciding the scheduled maintenance date taking into account the availability of the owner, that is, by setting a certain day within a period during which the approval indicator is equal to or greater than the approval threshold value as the scheduled maintenance date.

### *** Description of Effects of Embodiment 2 ***

As described above, according to the present embodiment, even if the operation schedule of each piece of equipment and the availability of the owner cannot be shared between the owner and the maintenance company, it is possible to create a plan proposal in a relatively more efficient manner that is acceptable to both the owner and the maintenance company by considering the owner availability prediction value to create and adjust the maintenance plan.

Further, according to the present embodiment, even if the owner is unable to grasp the operation status of the equipment, it is possible to create a relatively efficient maintenance plan.

### *** Other Embodiments ***

Each of the above described embodiments can be freely combined, any component of each of the embodiments can be modified, or any component may be omitted in each of the embodiments.

Alternatively, the embodiments are not limited to those presented in Embodiments 1 to 2, and various modifications can be made as needed. The procedures described using the flowcharts or the like may be modified as appropriate.

### Reference Signs List

11: processor; 12: memory; 13: auxiliary storage device; 14: input/output IF; 15: communication device; 18: processing circuit; 19: signal line; 100, 200: maintenance plan creation support apparatus; 110: failure time prediction unit; 120, 220: maintenance plan creation unit; 130: maintenance plan adjustment unit; 190, 290: DB group; 210: owner availability analysis unit.

## Claims

1. A maintenance plan creation support apparatus comprising
a maintenance plan creation unit, wherein when a maintenance work amount during a subject period exceeds a permissible amount for personnel in charge of maintenance during the subject period in a maintenance plan which is a plan that indicates a scheduled maintenance period which is a period during which maintenance work on each piece of equipment is scheduled to be performed, for each piece of equipment to be maintained by the personnel in charge of maintenance, and is a plan created based on prediction of a failure time corresponding to each piece of equipment, the maintenance plan creation unit changes a part of maintenance work scheduled to be performed within a period that includes at least a part of the subject period, to be performed during a period that does not overlap with the subject period so that the maintenance work amount during the subject period does not exceed the permissible amount in the maintenance plan, and
in a case where each piece of equipment indicated in the maintenance plan is set as a subject equipment, an administrator of the subject equipment is set as a subject administrator, and the scheduled maintenance period corresponding to the subject equipment indicated in the maintenance plan is set as a subject scheduled period, when the subject administrator does not approve maintenance work to be performed on the subject equipment during the subject scheduled period, the maintenance plan creation unit changes the scheduled maintenance period corresponding to the subject equipment to an approval period which is a period during which the subject administrator approves maintenance work on the subject equipment to be performed, in the maintenance plan.

2. The maintenance plan creation support apparatus according to claim 1, wherein
the maintenance plan creation unit, when the subject administrator does not approve maintenance work on the subject equipment to be performed during the subject scheduled period, changes the scheduled maintenance period corresponding to the subject equipment to the approval period so that the maintenance work amount during the approval period does not exceed the permissible amount for the personnel in charge of maintenance during the approval period, in the maintenance plan.

3. The maintenance plan creation support apparatus according to claim 1or 2 further comprising
a maintenance plan adjustment unit to notify the subject administrator of the subject scheduled period, and to decide whether or not to change the scheduled maintenance period corresponding to the subject equipment, in the maintenance plan, based on a response of the subject administrator that indicates whether or not the subject administrator approves maintenance work on the subject equipment to be performed during the subject scheduled period, wherein
the maintenance plan creation unit, when it is decided to change the scheduled maintenance period corresponding to the subject equipment, changes the scheduled maintenance period corresponding to the subject equipment.

4. The maintenance plan creation support apparatus according to claim 3, wherein
the maintenance plan adjustment unit, when the subject administrator approves maintenance work on the subject equipment during the subject scheduled period to be performed, sets a period during which the maintenance work on the subject equipment is performed, as the subject scheduled period.

5. The maintenance plan creation support apparatus according to any one of claims 1 to 4, wherein
the maintenance plan creation unit, when the maintenance work amount during the subject period exceeds the permissible amount for the personnel in charge of maintenance during the subject period in the maintenance plan, calculates priority corresponding to each piece of equipment in which maintenance work is scheduled to be performed within a period that includes at least a part of the subject period, in the maintenance plan, and changes the scheduled maintenance period corresponding to each piece of equipment whose corresponding reliability is relatively low, to a period that does not overlap with the subject period.

6. The maintenance plan creation support apparatus according to any one of claims 1 to 5 further comprising
an owner availability analysis unit to estimate a period during which the subject administrator is likely to approve maintenance work on the subject equipment based on performance of the maintenance work on the subject equipment, wherein
the maintenance plan creation unit sets the scheduled maintenance period corresponding to the subject equipment as a period within the period during which it is estimated that the subject administrator is likely to approve maintenance work on the subject equipment, in the maintenance plan.

7. The maintenance plan creation support apparatus according to claim 6, wherein
the owner availability analysis unit, as the owner availability analysis unit estimates a period during which the subject administrator is likely to approve maintenance work on the subject equipment, generates an approval indicator which is an indicator corresponding to the subject administrator and which is an indicator that indicates the ease of approval of maintenance work on the subject equipment for each period, and
the maintenance plan creation unit sets a period corresponding to a value that is equal to or greater than an approval threshold value in the approval indicator, as the period during which it is estimated that the subject administrator is likely to approve the maintenance work on the subject equipment.

8. A maintenance plan creation support method comprising
by a computer, when a maintenance work amount during a subject period exceeds a permissible amount for personnel in charge of maintenance during the subject period in a maintenance plan which is a plan that indicates a scheduled maintenance period which is a period during which maintenance work on each piece of equipment is scheduled to be performed, for each piece of equipment to be maintained by the personnel in charge of maintenance, and is a plan created based on prediction of a failure time corresponding to each piece of equipment, changing a part of maintenance work scheduled to be performed within a period that includes at least a part of the subject period, to be performed during a period that does not overlap with the subject period so that the maintenance work amount during the subject period does not exceed the permissible amount in the maintenance plan, and
by the computer, in a case where each piece of equipment indicated in the maintenance plan is set as a subject equipment, an administrator of the subject equipment is set as a subject administrator, and the scheduled maintenance period corresponding to the subject equipment indicated in the maintenance plan is set as a subject scheduled period, when the subject administrator does not approve maintenance work to be performed on the subject equipment during the subject scheduled period, changing the scheduled maintenance period corresponding to the subject equipment to an approval period which is a period during which the subject administrator approves maintenance work on the subject equipment to be performed, in the maintenance plan.

9. A maintenance plan creation support program for causing a maintenance plan creation support apparatus which is a computer to execute a maintenance plan creation process, wherein when a maintenance work amount during a subject period exceeds a permissible amount for personnel in charge of maintenance during the subject period in a maintenance plan which is a plan that indicates a scheduled maintenance period which is a period during which maintenance work on each piece of equipment is scheduled to be performed, for each piece of equipment to be maintained by the personnel in charge of maintenance, and is a plan created based on prediction of a failure time corresponding to each piece of equipment, the maintenance plan creation process changes a part of maintenance work scheduled to be performed within a period that includes at least a part of the subject period, to be performed during a period that does not overlap with the subject period so that the maintenance work amount during the subject period does not exceed the permissible amount in the maintenance plan, and
in a case where each piece of equipment indicated in the maintenance plan is set as a subject equipment, an administrator of the subject equipment is set as a subject administrator, and the scheduled maintenance period corresponding to the subject equipment indicated in the maintenance plan is set as a subject scheduled period, when the subject administrator does not approve maintenance work to be performed on the subject equipment during the subject scheduled period, the maintenance plan creation process changes the scheduled maintenance period corresponding to the subject equipment to an approval period which is a period during which the subject administrator approves maintenance work on the subject equipment to be performed, in the maintenance plan.
